# EUROPEAN PATENT APPLICATION

(11) **EP 4 224 083 A1**
(43) Date of publication of application: **09.08.2023**
(21) Application number: 21874820.0
(22) Date of filing: 07.06.2021
(51) Int. Cl.: F24F 13/08, F24F 7/007, F24F 8/24, F24F 8/50, F24F 11/79, F24F 120/10, F24F 120/14

(54) **AIRFLOW CONTROL SYSTEM, AIRFLOW CONTROL METHOD, AND PROGRAM**

(30) Priority: 29.09.2020 JP 2020164077
(71) Applicant: Panasonic Intellectual Property Management Co., Ltd., Osaka-shi, Osaka 540-6207 (JP)
(72) Inventor: TAKAHASHI, Hayato, Osaka-shi, Osaka 540-6207 (JP)
(74) Representative: Appelt, Christian W.
(86) International application number: PCT/JP2021/021604
(87) International publication number: WO 2022/070514

(57) **Abstract**

Provided are an airflow control system, an airflow control method, and a program, all of which enable changing a range in which a functional component is diffused. An airflow control system (1) includes a first outlet member (2), a second outlet member (3), a flow velocity adjustment system (4), a supply system (5), and a controller (6). The second outlet member (3) surrounds the first outlet member (2). The flow velocity adjustment system (4) may adjust a flow velocity of a first airflow (F1) flowing through an internal space (20) of the first outlet member (2) toward a first outlet vent (24) and a flow velocity of a second airflow (F2) flowing through a space (30) between the second outlet member (3) and the first outlet member (2) toward a second outlet vent (34). The supply system (5) may supply a functional component to be diffused in the air to at least one of the first airflow (F1) or the second airflow (F2). The controller (6) controls at least one of the flow velocity adjustment system (4) or the supply system (5).

## Description

### Technical Field

The present disclosure generally relates to an airflow control system, an airflow control method, and a program, and more particularly relates to an airflow control system including a first outlet member and a second outlet member, an airflow control method, and a program.

### Background Art

Patent Literature 1 discloses a fluid blowout control device in which a guide annular flow to blow out has a variable zone spread.

The fluid blowout control device according to an example disclosed in Patent Literature 1 includes: a first guide member having a first ceiling wall portion and a first cylindrical wall portion; a second guide member disposed inside the first guide member and having a second ceiling wall portion and a second cylindrical wall portion; a deflector plate; and a cylindrical supporting member fixed to the deflector plate. The supporting member has a plurality of through holes around a bottom thereof (i.e., around its portion fixed to the deflector plate) to allow the inside of the supporting member to communicate with the outside of the supporting member. The fluid blowout control device of Patent Literature 1 may narrow its air-conditioning range by lowering the deflector plate and broaden its air-conditioning range by elevating the deflector plate.

Sometimes there may be a demand, in the field of space zoning, for example, for changing the range in which functional components are diffused.

### Citation List

### Patent Literature

Patent Literature 1: JP H06-87325 A

### Summary of Invention

It is therefore an object of the present disclosure to provide an airflow control system, an airflow control method, and a program, all of which are configured or designed to change a range in which functional components are diffused.

An airflow control system according to an aspect of the present disclosure includes a first outlet member, a second outlet member, a flow velocity adjustment system, a supply system, and a controller. The first outlet member has a cylindrical shape. The first outlet member has a first outlet vent. The second outlet member has a second outlet vent. The second outlet member surrounds the first outlet member. The flow velocity adjustment system may adjust a flow velocity of a first airflow flowing through an internal space of the first outlet member toward the first outlet vent and a flow velocity of a second airflow flowing through a space between the second outlet member and the first outlet member toward the second outlet vent. The supply system may supply a functional component to be diffused in the air to at least one of the first airflow or the second airflow. The controller controls at least one of the flow velocity adjustment system or the supply system.

An airflow control method according to another aspect of the present disclosure includes at least one of a first control step or a second control step. The first control step includes controlling a flow velocity of a first airflow flowing through an internal space of a first outlet member toward a first outlet vent and a flow velocity of a second airflow flowing through a space between a second outlet member and the first outlet member toward a second outlet vent. The first outlet member has the first outlet vent and a cylindrical shape. The second outlet member has the second outlet vent and surrounds the first outlet member. The second control step includes controlling a state where a functional component to be diffused in the air is supplied to at least one of the first airflow or the second airflow.

A program according to still another aspect of the present disclosure is designed to cause a computer system to perform the airflow control method described above.

### Brief Description of Drawings

FIG. 1 illustrates a schematic configuration for an airflow control system according to a first embodiment;
FIG. 2 is a perspective view of a first outlet member and a second outlet member of the airflow control system;
FIG. 3A is a schematic plan view of a first resistance unit included in the airflow control system;
FIG. 3B is a schematic plan view of a second resistance unit included in the airflow control system;
FIG. 4A illustrates how the airflow control system may operate;
FIG. 4B illustrates how the airflow control system may also operate;
FIG. 5A illustrates how an airflow control system according to a first variation of the first embodiment may operate;
FIG. 5B illustrates how the airflow control system may also operate;
FIG. 6 illustrates a schematic configuration for an airflow control system according to a second embodiment;
FIG. 7 illustrates a schematic configuration for an airflow control system according to a third embodiment;
FIG. 8 illustrates a schematic configuration for an airflow control system according to a fourth embodiment; and
FIG. 9 illustrates a schematic configuration for an airflow control system according to a fifth embodiment.

### Description of Embodiments

The drawings to be referred to in the following description of first to fifth embodiments are all schematic representations. Thus, the ratio of the dimensions (including thicknesses) of respective constituent elements illustrated on the drawings does not always reflect their actual dimensional ratio.

### (First embodiment)

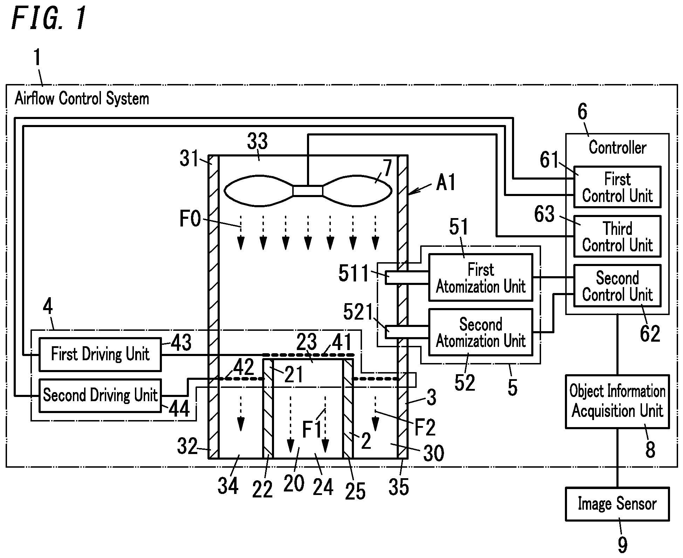

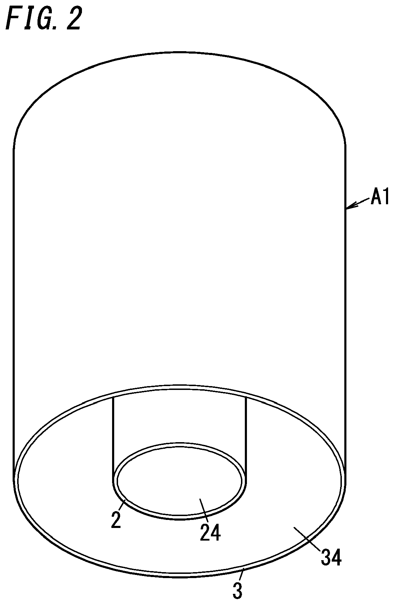

An airflow control system 1 according to a first embodiment will be described with reference to FIGS. 1-4B.

### (1) Overview

The airflow control system 1 may be used, for example, in space zoning. As used herein, the "space zoning" refers to air zoning, which means creating an air environment in a particular area within a target space without putting any physical wall such as a building wall or a partition.

The airflow control system 1 may add some functional component to an airflow blowing into the target space in a facility. In addition, the airflow control system 1 may also change the range in which the airflow containing the functional component expands in the target space. The airflow blowing out of the airflow control system 1 into the target space is a jet and a directional airflow with a degree of straightness. The facility may be an office building, for example. The target space may be, for example, a non-territorial office (which is called a "free-address office" in Japan) in the office building. However, the target space does not have to be a non-territorial office. Alternatively, the target space may also be a space such as an assembly room.

The airflow is a flow of the air. Examples of the functional components include a disinfection component, a sterilization component, a deodorization component, and a fragrance component. The airflow control system 1 may add the functional component to the airflow and carry the airflow containing the functional component by, for example, atomizing a solution containing the functional component.

Examples of the facilities include not only office buildings but also hotels, hospitals, educational institutions, single-family dwelling houses, multi-family dwelling houses (including dwelling units and common areas), stores, commercial facilities, art museums, and museums. Optionally, the facility does not have to be a building alone but may also be a premise with the building. Examples of such facilities include factories, public parks, amusement facilities, theme parks, airports, railway stations, and domed ballparks.

An airflow control system 1 includes a first outlet member 2, a second outlet member 3, a flow velocity adjustment system 4, a supply system 5, and a controller 6. The first outlet member 2 has a cylindrical shape. The first outlet member 2 has a first outlet vent 24. The second outlet member 3 has a second outlet vent 34. The second outlet member 3 surrounds the first outlet member 2. The flow velocity adjustment system 4 may adjust a flow velocity of a first airflow F1 flowing through an internal space 20 of the first outlet member 2 toward the first outlet vent 24 and a flow velocity of a second airflow F2 flowing through a space 30 between the second outlet member 3 and the first outlet member 2 toward the second outlet vent 34. The supply system 5 may supply a functional component to be diffused in the air to the first airflow F1 and the second airflow F2. The controller 6 controls at least one of the flow velocity adjustment system 4 or the supply system 5.

The airflow control system 1 according to the first embodiment enables changing the range in which the functional component is diffused. The airflow control system 1 according to the first embodiment may supply the functional component from the supply system 5 to the first airflow F1 and the second airflow F2. In the airflow control system 1 according to the first embodiment, the controller 6 controls the flow velocity adjustment system 4, thus enabling changing the flow velocities of the first airflow F1 and the second airflow F2 independently of each other. In addition, in the airflow control system 1 according to the first embodiment, the controller 6 controls the flow velocity adjustment system 4 to change the relative order between the flow velocity of the first airflow F1 and the flow velocity of the second airflow F2. This enables changing the range in which the functional component is diffused in the target space in which the first outlet vent 24 of the first outlet member 2 and the second outlet vent 34 of the second outlet member 3 communicate with each other. The airflow control system 1 may make the flow velocity of the second airflow F2 higher than the flow velocity of the first airflow F1, thus reducing the degree of directivity (i.e., decreasing the degree of straightness) of the airflow blowing out of the airflow control system 1 into the target space and thereby broadening the range in which the functional component is diffused in the target space, compared to a situation where the flow velocity of the second airflow F2 is made lower than the flow velocity of the first airflow F1. The airflow control system 1 according to the first embodiment enables creating a wide variety of environmental content in the target space.

### (2) Details

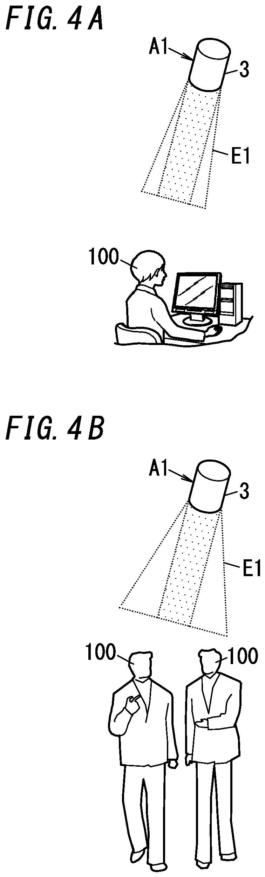

As described above, the airflow control system 1 includes the first outlet member 2, the second outlet member 3, the flow velocity adjustment system 4, the supply system 5, and the controller 6 as described above. In addition, the airflow control system 1 further includes an object information acquisition unit 8. The object information acquisition unit 8 acquires information about a target object 100 (refer to FIGS. 4A and 4B) present in a target space. In the airflow control system 1, the target object 100 is an organism (such as a person). The information about the target object 100 is the number of the organisms. The object information acquisition unit 8 acquires information about the target object 100 from an image sensor 9. In this embodiment, the image sensor 9 is not a constituent element of the airflow control system 1. However, this is only an example and should not be construed as limiting. Alternatively, the image sensor 9 may also be a constituent element of the airflow control system 1.

In addition, the airflow control system 1 further includes a blower 7. The blower 7 causes a gas (such as the air) to flow through the first outlet member 2 and the second outlet member 3.

The first outlet member 2 has a circular cylindrical shape. The first outlet member 2 has a first end 21 and a second end 22 along the axis of the first outlet member 2. The first outlet member 2 has a gas inlet port 23 at the first end 21 and has the first outlet vent 24 as a gas outlet port at the second end 22. A material for the first outlet member 2 may be, but does not have to be, a resin or a metal, for example.

The second outlet member 3 has the shape of a circular cylinder, of which the inside diameter is larger than the outside diameter of the first outlet member 2. The second outlet member 3 is arranged to have a center axis of the second outlet member 3 aligned with a center axis of the first outlet member 2. In other words, the second outlet member 3 is disposed coaxially with the first outlet member 2. The second outlet member 3 has a first end 31 and a second end 32 along the axis of the second outlet member 3. The second outlet member 3 has a gas inlet port 33 at the first end 31 and has the second outlet vent 34 as a gas outlet port at the second end 32. A material for the second outlet member 3 may be, but does not have to be, a resin or a metal, for example.

In the airflow control system 1, when measured in a direction parallel to the center axis of the first outlet member 2, the length of the first outlet member 2 is less than the length of the second outlet member 3. An opening verge 25 of the first outlet vent 24 of the first outlet member 2 and an opening verge 35 of the second outlet vent 34 of the second outlet member 3 are located at the same position in the direction parallel to the center axis of the first outlet member 2. In the airflow control system 1, the opening verge 25 of the first outlet vent 24 of the first outlet member 2 and the opening verge 35 of the second outlet vent 34 of the second outlet member 3 are flush with each other. In other words, in the airflow control system 1, the opening verge 25 of the first outlet vent 24 of the first outlet member 2 and the opening verge 35 of the second outlet vent 34 of the second outlet member 3 are on a single plane. The single plane is a virtual plane intersecting at right angles with the center axis of the first outlet member 2. The first end 21 of the first outlet member 2 is located, in the direction aligned with the center axis of first outlet member 2, closer to the second outlet vent 34 between the inlet port 33 and the second outlet vent 34 of the second outlet member 3. That is to say, when measured in the direction aligned with the center axis of the first outlet member 2, the distance between the first end 21 of the first outlet member 2 and the inlet port 33 is longer than the distance between the first end 21 of the first outlet member 2 and the second outlet vent 34.

The airflow control system 1 allows the air that has entered the second outlet member 3 through the inlet port 33 at the first end 31 of the first outlet member 2 to flow toward the first outlet vent 24 of the first outlet member 2 and the second outlet vent 34 of the second outlet member 3. The airflow control system 1 has a first flow channel including the internal space 20 of the first outlet member 2 and a second flow channel including the space 30 between the second outlet member 3 and the first outlet member 2.

In the airflow control system 1, in an outlet unit A1 including the first outlet member 2 and the second outlet member 3, the first outlet member 2 is supported by the second outlet member 3 via a plurality of beams. In the airflow control system 1, the outlet unit A1 is used to be suspended from the ceiling, for example. However, this is only an example and should not be construed as limiting. Alternatively, the airflow control system 1 may also be supported by a guide rail to be movable freely. Still alternatively, the airflow control system 1 may also be embedded in a ceiling member to make the first outlet vent 24 and the second outlet vent 34 face the target space. Yet alternatively, the outlet unit A1 may also be mounted on a wall or a stand.

The blower 7 blows an airflow F0 toward the internal space 20 of the first outlet member 2 and the space 30 between the second outlet member 3 and the first outlet member 2. The blower 7 may be an electric fan, for example. The blower 7 is an electric fan, of which the rotational velocity is variable. The blower 7 is disposed inside the second outlet member 3. The blower 7 is disposed, along the axis of the second outlet member 3, adjacent to the first end 31, out of the first end 31 and the second end 32, of the second outlet member 3. When measured along the axis of the second outlet member 3, the distance between the blower 7 and the first end 31 of the second outlet member 3 is shorter than the distance between the blower 7 and the second end 32 of the second outlet member 3. The blower 7 is located between the inlet port 33 of the second outlet member 3 and the first outlet member 2. The airflow control system 1 does not have to include the blower 7. Alternatively, the airflow control system 1 may also be configured to allow air coming from air-conditioning equipment upstream of the airflow control system 1 to flow into the inlet port 23 of the first outlet member 2 and the inlet port 33 of the second outlet member 3. The air-conditioning equipment may be a blower, for example. However, this is only an example and should not be construed as limiting. Alternatively, the air-conditioning equipment may also be a ventilator, an air conditioner, an air supply fan, or an air-conditioning system including a blower and a heat exchanger.

The flow velocity adjustment system 4 is a system having the ability to adjust the flow velocity of the first airflow F1 flowing through the internal space 20 of the first outlet member 2 toward the first outlet vent 24 and the flow velocity of the second airflow F2 flowing through the space 30 between the second outlet member 3 and the first outlet member 2 toward the second outlet vent 34.

In the airflow control system 1, the flow velocity adjustment system 4 includes a first resistance unit 41 that adjusts the flow velocity of the first airflow F1 by changing air resistance and a second resistance unit 42 that adjusts the flow velocity of the second airflow F2 by changing the air resistance.

The first resistance unit 41 is a device having the ability to adjust the air resistance by changing the area of a passage region through which the air passes (i.e., the cross-sectional area of the flow channel through which the airflow F0 passes). The second resistance unit 42 is a device having the ability to adjust the air resistance by changing the area of a passage region through which the air passes (i.e., the cross-sectional area of the flow channel through which the airflow F0 passes).

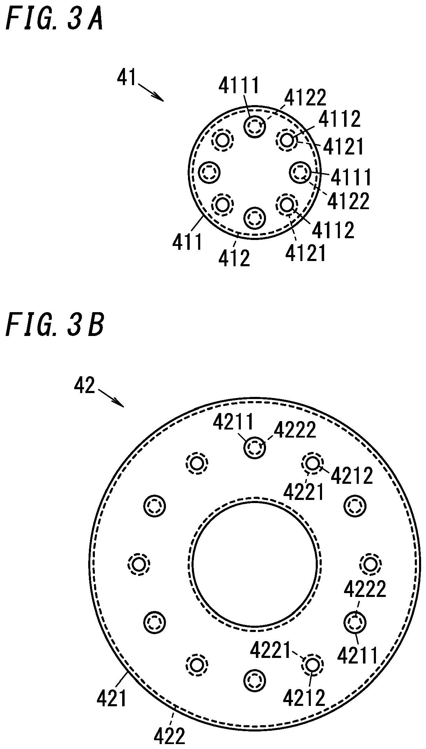

The first resistance unit 41 may include, for example, a first punched metal plate 411 (refer to FIG. 3A) and a second punched metal plate 412 (refer to FIG. 3A) which overlap with each other in the direction aligned with the center axis of the first outlet member 2. In the first resistance unit 41, each of the first punched metal plate 411 and the second punched metal plate 412 has a circular shape when viewed in the direction aligned with the center axis of the first outlet member 2. In the first punched metal plate 411, a plurality of larger holes 4111 and a plurality of smaller holes 4112 may be, for example, alternately arranged one by one at equal pitches on a first virtual circle along the outer periphery of the first punched metal plate 411. The inside diameter of the larger holes 4111 is larger than the inside diameter of the smaller holes 4112. On the other hand, in the second punched metal plate 412, a plurality of larger holes 4121 and a plurality of smaller holes 4122 may be, for example, alternately arranged one by one at equal pitches on a second virtual circle along the outer periphery of the second punched metal plate 412. The inside diameter of the larger holes 4121 is larger than the inside diameter of the smaller holes 4122. The first virtual circle and the second virtual circle have the same diameter. The first resistance unit 41 may adjust the air resistance by being driven to rotate either the first punched metal plate 411 or the second punched metal plate 412 around a rotational axis aligned with the center axis of the first outlet member 2. The first resistance unit 41 may make the air resistance different, for example, depending on whether the first resistance unit 41 is in a first state or in a second state. The first state of the first resistance unit 41 is a state where the plurality of larger holes 4111 of the first punched metal plate 411 and the plurality of smaller holes 4122 of the second punched metal plate 412 overlap one to one with each other and the plurality of smaller holes 4112 of the first punched metal plate 411 and the plurality of larger holes 4121 of the second punched metal plate 412 overlap one to one with each other as shown in FIG. 3A. The second state of the first resistance unit 41 is a state where the plurality of larger holes 4111 of the first punched metal plate 411 and the plurality of larger holes 4121 of the second punched metal plate 412 overlap one to one with each other and the plurality of smaller holes 4112 of the first punched metal plate 411 and the plurality of smaller holes 4122 of the second punched metal plate 412 overlap one to one with each other.

The second resistance unit 42 may include, for example, a first punched metal plate 421 (refer to FIG. 3B) and a second punched metal plate 422 (refer to FIG. 3B) which overlap with each other in the direction aligned with the center axis of the second outlet member 3. In the second resistance unit 42, each of the first punched metal plate 421 and the second punched metal plate 412 has an annular shape when viewed in the direction aligned with the center axis of the second outlet member 3. In the first punched metal plate 421, a plurality of larger holes 4211 and a plurality of smaller holes 4212 may be, for example, alternately arranged one by one at equal pitches on a third virtual circle along the outer periphery of the first punched metal plate 421. The inside diameter of the larger holes 4211 is larger than the inside diameter of the smaller holes 4212. On the other hand, in the second punched metal plate 422, a plurality of larger holes 4221 and a plurality of smaller holes 4222 may be, for example, alternately arranged one by one at equal pitches on a fourth virtual circle along the outer periphery of the second punched metal plate 422. The inside diameter of the larger holes 4221 is larger than the inside diameter of the smaller holes 4222. The third virtual circle and the fourth virtual circle have the same diameter. The second resistance unit 42 may adjust the air resistance by being driven to rotate either the first punched metal plate 421 or the second punched metal plate 422 around a rotational axis aligned with the center axis of the second outlet member 3. The second resistance unit 42 may make the air resistance different, for example, depending on whether the second resistance unit 42 is in a first state or in a second state. The first state of the second resistance unit 42 is a state where the plurality of larger holes 4211 of the first punched metal plate 421 and the plurality of smaller holes 4222 of the second punched metal plate 422 overlap one to one with each other and the plurality of smaller holes 4212 of the first punched metal plate 421 and the plurality of larger holes 4221 of the second punched metal plate 422 overlap one to one with each other as shown in FIG. 3B. The second state of the second resistance unit 42 is a state where the plurality of larger holes 4211 of the first punched metal plate 421 and the plurality of larger holes 4221 of the second punched metal plate 422 overlap one to one with each other and the plurality of smaller holes 4212 of the first punched metal plate 421 and the plurality of smaller holes 4222 of the second punched metal plate 422 overlap one to one with each other.

The flow velocity adjustment system 4 further includes a first driving unit 43 for driving the first resistance unit 41 and a second driving unit 44 for driving the second resistance unit 42.

The first driving unit 43 drives in rotation either the first punched metal plate 411 or the second punched metal plate 412 in the first resistance unit 41 around a rotational center axis aligned with the center axis of the first outlet member 2. The first driving unit 43 may include, for example, a first motor for driving in rotation either the first punched metal plate 411 or the second punched metal plate 412. In the first driving unit 43, the rotary shaft of the first motor may be coupled either directly or indirectly to either the first punched metal plate 411 or the second punched metal plate 412. The first driving unit 43 may also be configured to transmit the rotational force of the rotary shaft of the first motor to either the first punched metal plate 411 or the second punched metal plate 412 via a pulley and a rotating belt. The first motor may be disposed inside or outside the second outlet member 3, whichever is appropriate.

The second driving unit 44 drives in rotation either the first punched metal plate 421 or the second punched metal plate 422 in the second resistance unit 42 around a rotational center axis aligned with the center axis of the second outlet member 3. The second driving unit 44 may include, for example, a second motor for driving in rotation either the first punched metal plate 421 or the second punched metal plate 422. In the second driving unit 44, the rotary shaft of the second motor may be coupled either directly or indirectly to either the first punched metal plate 421 or the second punched metal plate 422. The second driving unit 44 may also be configured to transmit the rotational force of the rotary shaft of the second motor to either the first punched metal plate 421 or the second punched metal plate 422 via a pulley and a rotating belt. The second motor may be disposed inside or outside the second outlet member 3, whichever is appropriate.

The supply system 5 is a system having the ability to supply a functional component to be diffused in the air to the first airflow F1 and the second airflow F2. The supply system 5 may supply multiple types of functional components. The supply system 5 is a system having the ability to supply the multiple types (e.g., two types) of functional components to a region upstream of the first outlet member 2. The two types of functional components are a first functional component and a second functional component.

The supply system 5 may include, for example, a first atomization unit 51 for atomizing a first solution containing the first functional component and a second atomization unit 52 for atomizing a second solution containing the second functional component. A device for energizing the first solution to cause the first atomization unit 51 to atomize the first solution may be, for example, an ultrasonic transducer. However, this is only an example and should not be construed as limiting. Alternatively, the device may also be a surface acoustic wave (SAW) device, for example. A device for energizing the second solution to cause the second atomization unit 52 to atomize the second solution may be, for example, an ultrasonic transducer. However, this is only an example and should not be construed as limiting. Alternatively, the device may also be a SAW device, for example. The supply system 5 further includes a first nozzle 511 for supplying the first functional component atomized by the first atomization unit 51 to a region upstream of the first outlet member 2 and a second nozzle 521 for supplying the second functional component atomized by the second atomization unit 52 to a region upstream of the first outlet member 2.

The controller 6 controls at least one of the flow velocity adjustment system 4 or the supply system 5. The controller 6 adjusts the functional component to be supplied, out of the multiple types of functional components, from the supply system 5 to the first airflow F1 and the second airflow F2 by controlling the supply system 5. In the airflow control system 1, the controller 6 controls at least one of the flow velocity adjustment system 4 or the supply system 5 in accordance with the information acquired by the object information acquisition unit 8. The object information acquisition unit 8 acquires information about the target object 100 present in the target space from the image sensor 9. The image sensor 9 may be, for example, an infrared sensor device including an infrared sensor, a thermistor, a signal processor, and a package. The infrared sensor includes a plurality of detection units (pixel units) which are arranged to form a two-dimensional array. The signal processor performs signal processing on an output signal of the infrared sensor. In this case, the signal processor generates still thermal image data continuously by performing the signal processing on the output signal of the infrared sensor. The signal processor also performs signal processing on an output signal of the thermistor. The signal processor calculates the temperature of an object present in a detection area in the target space based on the respective output signals of the plurality of detection units of the infrared sensor and the output signal of the thermistor. The signal processor generates still thermal image data continuously by performing the signal processing on the output signal of the infrared sensor. The still thermal image data is data representing a temperature distribution in the detection area and may be used to generate a thermal image representing the temperature distribution in the detection area. The signal processor may sequentially output the still thermal image data thus generated. In addition, the signal processor may also detect, based on the still thermal image data, the presence or absence of any organism in/from the detection area of the infrared sensor device and the number of the organisms if any. The infrared sensor device includes a communications interface for transmitting and receiving, for example, information about the organism present in the target space to/from an external device. The respective pixel values of a plurality of pixels of the still thermal image are temperatures.

The image sensor 9 does not have to be the infrared sensor device but may also be, for example, a complementary metal-oxide semiconductor (CMOS) image sensor, a charge-coupled device (CCD) image sensor, or a distance image sensor which uses a distance as a pixel value.

In this embodiment, the image sensor 9 is not a constituent element of the airflow control system 1. However, this is only an example and should not be construed as limiting. Alternatively, the image sensor 9 may also be one of constituent elements of the airflow control system 1.

The controller 6 includes a first control unit 61, a second control unit 62, and a third control unit 63. The first control unit 61 controls the flow velocity adjustment system 4. The second control unit 62 controls the supply system 5. The third control unit 63 controls the blower 7.

If the object information acquisition unit 8 has acquired information that the number of persons present in the target space is one, for example, the first control unit 61 controls at least one of the first resistance unit 41 or the second resistance unit 42 to make the flow velocity of the first airflow F1 higher than the flow velocity of the second airflow F2. On the other hand, if the object information acquisition unit 8 has acquired information that the number of persons present in the target space is two or more, for example, the first control unit 61 controls at least one of the first resistance unit 41 or the second resistance unit 42 to make the flow velocity of the second airflow F2 higher than the flow velocity of the first airflow F1.

If the object information acquisition unit 8 has acquired information that the number of persons present in the target space is one, for example, the second control unit 62 controls the supply system 5 such that a functional component (first functional component) is supplied from only the first atomization unit 51, out of the first atomization unit 51 and the second atomization unit 52, to a region upstream of the first outlet member 2. On the other hand, if the object information acquisition unit 8 has acquired information that the number of persons present in the target space is two or more, for example, the second control unit 62 controls the supply system 5 such that a functional component (second functional component) is supplied from only the second atomization unit 52, out of the first atomization unit 51 and the second atomization unit 52, to the region upstream of the first outlet member 2. The first functional component may be, for example, a deodorization component or a fragrance component. The second functional component may be, for example, a disinfection component or a sterilization component. However, the second control unit 62 does not have to control the supply system 5 in this manner. Alternatively, the second control unit 62 may also control the supply system 5 such that the amount of the functional component to be supplied from either the first atomization unit 51 or the second atomization unit 52 to the region upstream of the first outlet member 2 varies according to the number of persons present there.

If the object information acquisition unit 8 has acquired information that a person is present in the target space, for example, the third control unit 63 controls the blower 7 to start running the blower 7. On the other hand, if the object information acquisition unit 8 has acquired information that no person is present in the target space, for example, the third control unit 63 controls the blower 7 to stop running the blower 7.

The object information acquisition unit 8 may be provided separately from the controller 6 or included in the controller 6, whichever is appropriate.

The controller 6 includes a computer system. The computer system includes a processor and a memory as principal hardware components thereof. The functions of the controller 6 may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

### (3) Airflow control method and program

An airflow control method according to the first embodiment includes at least one of a first control step or a second control step. The first control step includes controlling the flow velocity of the first airflow F 1 flowing through the internal space 20 of the first outlet member 2 toward the first outlet vent 24 and the flow velocity of the second airflow F2 flowing through the space 30 between the second outlet member 3 and the first outlet member 2 toward the second outlet vent 34. The first outlet member 2 has the first outlet vent 24 and a cylindrical shape. The second outlet member 3 has the second outlet vent 34 and surrounds the first outlet member 2. The second control step includes controlling a state where a functional component to be diffused in the air is supplied to the first airflow F 1 or the second airflow F2. As used herein, the phrase "to diffuse the functional component in the air" means diffusing the functional component toward a desired range in the target space.

According to the airflow control method, if the first control step and the second control step are both performed, then the first control step and the second control step may be, but do not have to be, performed simultaneously.

A program according to the first embodiment is designed to cause a computer system (controller 6) to perform the airflow control method described above.

### (4) Advantages

In the airflow control system 1 according to the first embodiment, the controller 6 controls at least one of the flow velocity adjustment system 4 or the supply system 5 and thereby enables changing a range in which the functional component is diffused.

In addition, in the airflow control system 1 according to the first embodiment, the flow velocity adjustment system 4 includes the first resistance unit 41 that adjusts the flow velocity of the first airflow F1 and the second resistance unit 42 that adjusts the flow velocity of the second airflow F2. Thus, the flow velocity adjustment system 4 enables changing the relative order between the flow velocity of the first airflow F1 and the flow velocity of the second airflow F2 by adjusting at least one of the air resistance of the first resistance unit 41 to the first airflow F1 or the air resistance of the second resistance unit 42 to the second airflow F2. Thus, the airflow control system 1 according to the first embodiment makes the flow velocity of the second airflow F2 higher than the flow velocity of the first airflow F1, thus reducing the degree of directivity (i.e., decreasing the degree of straightness) of the airflow blowing out of the airflow control system 1 into the target space and thereby broadening the range in which the functional component is diffused in the target space, compared to a situation where the flow velocity of the second airflow F2 is made lower than the flow velocity of the first airflow F1.

In addition, in the airflow control system 1 according to the first embodiment, the supply system 5 may supply multiple types of functional components. The controller 6 adjusts, by controlling the supply system 5, any of the multiple types of the functional components to be supplied from the supply system 5 to the first airflow F1 and the second airflow F2. Thus, the airflow control system 1 according to the first embodiment enables changing the functional component to be supplied from the supply system 5 to the first airflow F1 and the second airflow F2.

Furthermore, in the airflow control system 1 according to the first embodiment, the controller 6 controls, in accordance with the information acquired by the object information acquisition unit 8 about the target object 100 present in the target space, at least one of the flow velocity adjustment system 4 or the supply system 5. Thus, the airflow control system 1 may control at least one of the flow velocity adjustment system 4 or the supply system 5 according to the environment of a target area to be affected by the target object 100 present in the target area. This allows the airflow control system 1 according to the first embodiment to change the range in which the functional component is diffused according to the environment of the target area. FIG. 4A schematically illustrates a range E1 in which an airflow blowing out of the outlet unit A1 into the target space expands in a situation where the number of persons present as the target object 100 in the target space is one. FIG. 4B schematically illustrates a range E1 in which an airflow blowing out of the outlet unit A1 into the target space expands in a situation where the number of persons present as the target object 100 in the target space is two.

### (5) Variations of first embodiment

### (5.1) First variation

Although the target object 100 is supposed to be an organism in the airflow control system 1 according to the first embodiment, the target object 100 is a table in an airflow control system 1 according to a first variation of the first embodiment, which is a difference from the first embodiment. In the airflow control system 1 according to the first variation, information acquired by the object information acquisition unit 8 about the target object 100 includes at least one of the number of tables or the size of the table.

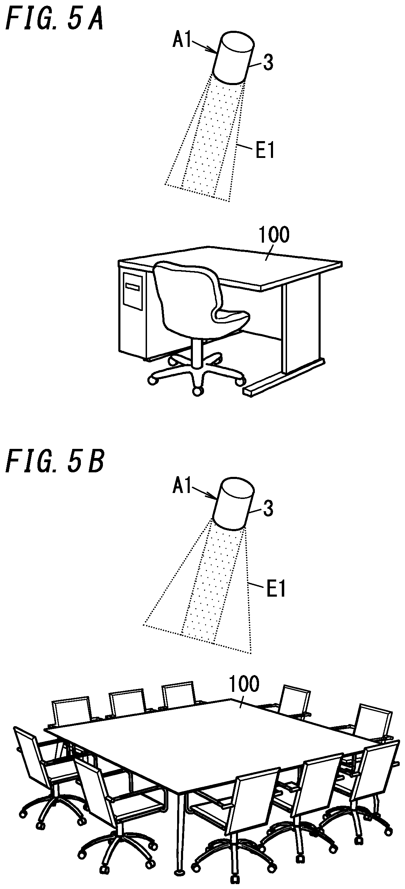

In the airflow control system 1 according to the first variation, if a size, acquired by the object information acquisition unit 8, of a table present in the target space is smaller than a predetermined size (e.g., if the size of a table actually present as the target object 100 in the target space is that of a table for one person as shown in FIG. 5A), for example, then the first control unit 61 controls at least one of the first resistance unit 41 or the second resistance unit 42 to make the flow velocity of the first airflow F1 higher than the flow velocity of the second airflow F2. FIG. 5A schematically illustrates a range E1 in which the airflow blowing out of the outlet unit A1 into the target space expands in such a situation. On the other hand, if the size, acquired by the object information acquisition unit 8, of the table present in the target space is larger than the predetermined size (e.g., if the size of a table actually present as the target object 100 in the target space is that of a table for multiple persons as shown in FIG. 5B), then the first control unit 61 controls at least one of the first resistance unit 41 or the second resistance unit 42 to make the flow velocity of the second airflow F2 higher than the flow velocity of the first airflow F1. FIG. 5B schematically illustrates a range E1 in which the airflow blowing out of the outlet unit A1 into the target space expands in such a situation. Note that this is only an exemplary control to be performed by the first control unit 61 on the flow velocity adjustment system 4. Alternatively, the first control unit 61 may control at least one of the first resistance unit 41 or the second resistance unit 42 according to the number of the tables present as target objects 100 in the target space, instead of the size of the table present as the target object 100 there. Still alternatively, the first control unit 61 may control at least one of the first resistance unit 41 or the second resistance unit 42 according to the size and number of the table(s) present there.

If the size, acquired by the object information acquisition unit 8, of a table present in the target space is smaller than the predetermined size, for example, then the second control unit 62 controls the supply system 5 such that a functional component (first functional component) is supplied from only the first atomization unit 51, out of the first atomization unit 51 and the second atomization unit 52, to a region upstream of the first outlet member 2. On the other hand, if the size, acquired by the object information acquisition unit 8, of the table present in the target space is larger than the predetermined size, then the second control unit 62 controls the supply system 5 such that a functional component (second functional component) is supplied from only the second atomization unit 52, out of the first atomization unit 51 and the second atomization unit 52, to the region upstream of the first outlet member 2. The first functional component may be, for example, a deodorization component or a fragrance component. The second functional component may be, for example, a disinfection component or a sterilization component. Note that this is only an exemplary control to be performed by the second control unit 62 on the supply system 5. Alternatively, the second control unit 62 may also control the supply system 5 such that the amount of the functional component to be supplied from either the first atomization unit 51 or the second atomization unit 52 to the region upstream of the first outlet member 2 varies according to the number of the tables present as target objects 100 in the target space, instead of the size of the table present there. Still alternatively, the second control unit 62 may control at least one of the first atomization unit 51 or the second atomization unit 52 according to the size and number of the table(s) present there.

### (5.2) Other variations

In the airflow control system 1 according to the first embodiment described above, the controller 6 controls, in accordance with the information acquired by the object information acquisition unit 8, at least one of the flow velocity adjustment system 4 or the supply system 5. However, this is only an example and should not be construed as limiting. Alternatively, the controller 6 may also control, in accordance with an operating command entered through an operating member (such as a remote controller or an operating switch) which may be operated by a person, at least one of the flow velocity adjustment system 4 or the supply system 5. Still alternatively, the controller 6 may also control, in response to the output of an AI loudspeaker that accepts a human voice command, for example, at least one of the flow velocity adjustment system 4 or the supply system 5. Yet alternatively, the controller 6 may also control, based on voices of, for example, persons who are having a conversation in a target area, at least one of the flow velocity adjustment system 4 or the supply system 5.

Also, if the target object 100 is an organism, the organism does not have to be a person but may also be an animal such as a dog or a cat.

Furthermore, the target object 100 does not have to be an organism or a table but may also be a chair or a piece of equipment (such as a treadmill).

Furthermore, information acquired by the object information acquisition unit 8 about the target object 100 present in the target space does not have to be collected from the image sensor 9 but may also be collected from, for example, a human detection sensor, an ultrasonic sensor, a doppler sensor, or a radio wave sensor.

The first resistance unit 41 does not have to have the configuration described above. Alternatively, in the first resistance unit 41, the first punched metal plate 411 may have a plurality of arc-shaped slits instead of the plurality of larger holes 4111 and the plurality of smaller holes 4112 and the second punched metal plate 412 may have a plurality of arc-shaped slits instead of the plurality of larger holes 4121 and the plurality of smaller holes 4122.

The second resistance unit 42 does not have to have the configuration described above. Alternatively, in the second resistance unit 42, the first punched metal plate 421 may have a plurality of arc-shaped slits instead of the plurality of larger holes 4211 and the plurality of smaller holes 4212 and the second punched metal plate 422 may have a plurality of arc-shaped slits instead of the plurality of larger holes 4221 and the plurality of smaller holes 4222.

In the airflow control system 1 according to the first embodiment, the flow velocity adjustment system 4 includes the first resistance unit 41 and the second resistance unit 42. However, this is only an example and should not be construed as limiting. Alternatively, the flow velocity adjustment system 4 may include at least one of the first resistance unit 41 or the second resistance unit 42. For example, if the flow velocity adjustment system 4 includes only the first resistance unit 41 out of the first resistance unit 41 and the second resistance unit 42, the flow velocity of the first airflow F1 may be decreased and the flow velocity of the second airflow F2 may be increased by increasing the air resistance of the first resistance unit 41.

Furthermore, in the airflow control system 1 according to the first embodiment, the flow velocity adjustment system 4 includes the first driving unit 43 and the second driving unit 44. However, this is only an example and should not be construed as limiting. Alternatively, the flow velocity adjustment system 4 may include at least one of the first driving unit 43 or the second driving unit 44.

Furthermore, in the airflow control system 1 according to the first embodiment, the supply system 5 is configured to be able to supply the functional component to be diffused in the air to both the first airflow F1 and the second airflow F2. However, this is only an example and should not be construed as limiting. Alternatively, the supply system 5 may also be configured to be able to supply the functional component to at least one of the first airflow F1 or the second airflow F2.

Furthermore, in the airflow control system 1 according to the first embodiment, the opening verge 25 of the first outlet vent 24 of the first outlet member 2 and the opening verge 35 of the second outlet vent 34 of the second outlet member 3 are flush with each other. However, this is only an example and should not be construed as limiting. Alternatively, these opening verges 25 and 34 do not have to be flush with each other. That is to say, in the airflow control system 1, a first virtual plane including the opening verge 25 of the first outlet vent 24 and a second virtual plane including the opening verge 35 of the second outlet vent 34 may be separate from each other in the direction parallel to the center axis of the first outlet member 2.

### (Second embodiment)

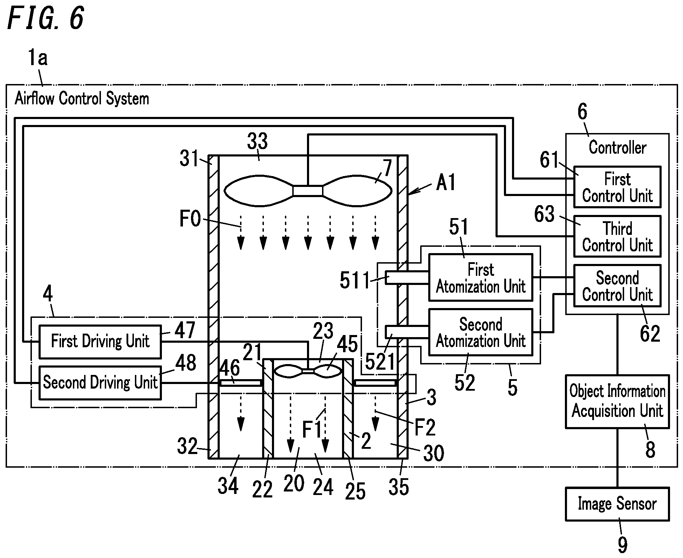

Next, an airflow control system 1a according to a second embodiment will be described with reference to FIG. 6. The airflow control system 1a according to the second embodiment includes a flow velocity adjustment system 4a instead of the flow velocity adjustment system 4 of the airflow control system 1 according to the first embodiment, which is a difference from the airflow control system 1 according to the first embodiment. In the following description, any constituent element of the airflow control system 1a according to this second embodiment, having the same function as a counterpart of the airflow control system 1 according to the first embodiment described above, will be designated by the same reference numeral as that counterpart's, and description thereof will be omitted herein.

The flow velocity adjustment system 4a, as well as the flow velocity adjustment system 4, may adjust the flow velocity of the first airflow F1 and the flow velocity of the second airflow F2. The flow velocity adjustment system 4a includes a first fan 45 for adjusting the flow velocity of the first airflow F1 and a second fan 46 for adjusting the flow velocity of the second airflow F2.

The first fan 45 is an electric fan. The first fan 45 is an electric fan, of which the rotational velocity is variable. The first fan 45 is disposed in the internal space 20 of the first outlet member 2. The first fan 45 is disposed, along the axis of the first outlet member 2, adjacent to the first end 21, out of the first end 21 and the second end 22, of the first outlet member 2.

The second fan 46 is an electric fan. The second fan 46 is an electric fan, of which the rotational velocity is variable. The second fan 46 is disposed in the space 30 between the second outlet member 3 and the first outlet member 2.

In the airflow control system 1a according to the second embodiment, the flow velocity adjustment system 4a further includes a first driving unit 47 for driving the first fan 45 and a second driving unit 48 for driving the second fan 46.

The controller 6 controls the rotational velocity of the first fan 45 by controlling the first driving unit 47 of the flow velocity adjustment system 4a, thus enabling controlling the flow velocity of the first airflow F1. In addition, the controller 6 controls the rotational velocity of the second fan 46 by controlling the second driving unit 48 of the flow velocity adjustment system 4a, thus enabling controlling the flow velocity of the second airflow F2.

In the airflow control system 1a according to the second embodiment, the controller 6 controls the flow velocity adjustment system 4a, and therefore, may change the relative order between the flow velocity of the first airflow F1 and the flow velocity of the second airflow F2. The airflow control system 1a according to the second embodiment may make the flow velocity of the second airflow F2 higher than the flow velocity of the first airflow F1, thus reducing the degree of directivity (i.e., decreasing the degree of straightness) of the airflow blowing out of the airflow control system 1a into the target space and thereby broadening the range in which the functional component is diffused in the target space, compared to a situation where the flow velocity of the second airflow F2 is made lower than the flow velocity of the first airflow F1.

### (Third embodiment)

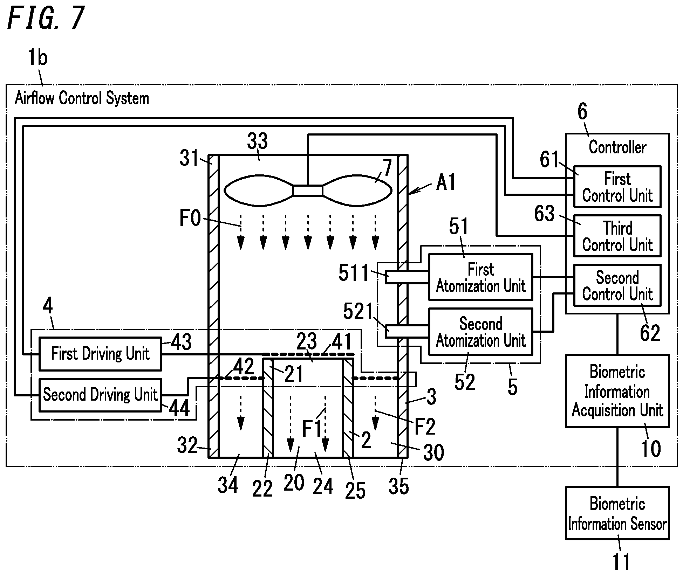

Next, an airflow control system 1b according to a third embodiment will be described with reference to FIG. 7. The airflow control system 1b according to the third embodiment includes a biometric information acquisition unit 10 instead of the object information acquisition unit 8 of the airflow control system 1 according to the first embodiment, which is a difference from the airflow control system 1 according to the first embodiment. In the following description, any constituent element of the airflow control system 1b according to this third embodiment, having the same function as a counterpart of the airflow control system 1 according to the first embodiment described above, will be designated by the same reference numeral as that counterpart's, and description thereof will be omitted herein.

In the airflow control system 1b, the controller 6 controls, in accordance with the information acquired by the biometric information acquisition unit 10, at least one of the flow velocity adjustment system 4 or the supply system 5. The biometric information acquisition unit 10 acquires biometric information about an organism present in the target area. The controller 6 controls, in accordance with the information acquired by the biometric information acquisition unit 10, at least one of the flow velocity adjustment system 4 or the supply system 5. The biometric information acquisition unit 10 may be provided separately from the controller 6 or included in the controller 6, whichever is appropriate.

The biometric information acquisition unit 10 may acquire, from a biometric information sensor 11, for example, biometric information about an organism (such as a person) present in the target space. In this embodiment, the biometric information sensor 11 is not a constituent element of the airflow control system 1b. Alternatively, the biometric information sensor 11 may also be a constituent element of the airflow control system 1b.

As the biometric information sensor 11, a wearable terminal for measuring at least a heartbeat may be used, for example. Examples of such a wearable terminal for measuring at least a heartbeat include a wristband-shaped wearable terminal or a wristwatch-shaped wearable terminal to be worn, on the wrist, by the person who enters and leaves the target space.

The controller 6 includes a decision unit for determining, based on the biometric information acquired by the biometric information acquisition unit 10, a stress level of a person associated with the biometric information. The second control unit 62 control the supply system 5 based on the decision made by the decision unit. In this airflow control system 1b, the first atomization unit 51 may supply a fragrance component (such as a citrus fragrance component) that would make the person relaxed as a first functional component to the first airflow F1 and the second airflow F2. The second atomization unit 52 may supply a deodorization component as a second functional component to the first airflow F1 and the second airflow F2.

If the decision unit decides that the person present in the target area have a high stress level, the second control unit 62 makes the first atomization unit 51 supply the first functional component. On the other hand, if the decision unit decides that the person present in the target area have a low stress level, the second control unit 62 may either make the second atomization unit 52 supply the second functional component or deactivate the first atomization unit 51 and the second atomization unit 52, whichever is appropriate. Furthermore, if the stress level is determined to be low after the first functional component has been supplied in accordance with the decision made by the decision unit that the person have a high stress level, the second control unit 62 may either continue supplying the first functional component for a predetermined time or decrease the amount of the first functional component to supply, whichever is appropriate.

If the decision unit decides that the person present in the target area have a high stress level, then the first control unit 61 controls the flow velocity adjustment system 4 to make the flow velocity of the first airflow F 1 higher than the flow velocity of the second airflow F2. On the other hand, if the decision unit decides that the person present in the target area have a low stress level, then the first control unit 61 controls the flow velocity adjustment system 4 to make the flow velocity of the second airflow F2 higher than the flow velocity of the first airflow F1.

If the biometric information acquisition unit 10 has acquired biometric information, for example, the third control unit 63 controls the blower 7 to make the blower 7 start turning. On the other hand, if no biometric information has been acquired for a certain time or more, the third control unit 63 controls the blower 7 to make the blower 7 stop turning.

The airflow control system 1b according to the third embodiment, as well as the airflow control system 1 according to the first embodiment, includes the flow velocity adjustment system 4, the supply system 5, and the controller 6, and therefore, enables changing the range in which the functional component is diffused.

The biometric information sensor 11 does not have to be a wearable terminal for measuring a heartbeat. Alternatively, the biometric information sensor 11 may also be a wearable terminal for measuring at least an electrocardiogram. Examples of such a wearable terminal for measuring at least an electrocardiogram include a wristwatch-shaped wearable terminal to be worn, on the wrist, by the target person.

### (Fourth embodiment)

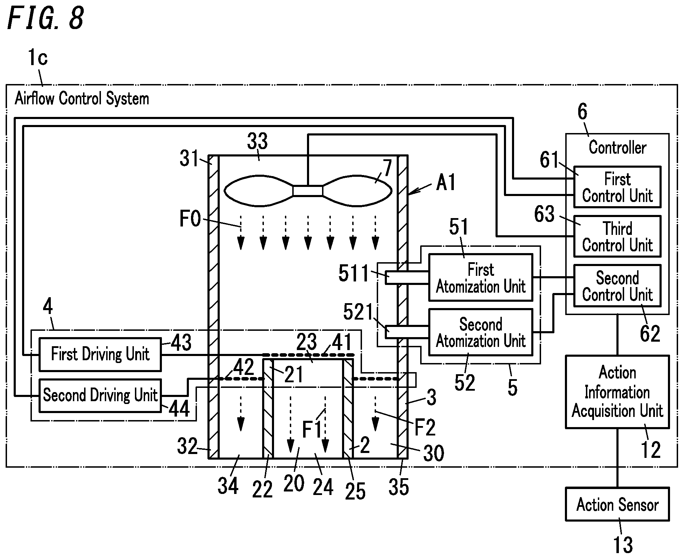

Next, an airflow control system 1c according to a fourth embodiment will be described with reference to FIG. 8. The airflow control system 1c according to the fourth embodiment includes an action information acquisition unit 12 instead of the object information acquisition unit 8 of the airflow control system 1 according to the first embodiment, which is a difference from the airflow control system 1 according to the first embodiment. In the following description, any constituent element of the airflow control system 1c according to this fourth embodiment, having the same function as a counterpart of the airflow control system 1 according to the first embodiment described above, will be designated by the same reference numeral as that counterpart's, and description thereof will be omitted herein.

In the airflow control system 1c, the controller 6 controls, in accordance with the information acquired by the action information acquisition unit 12, at least one of the flow velocity adjustment system 4 or the supply system 5. The action information acquisition unit 12 acquires action information about an organism present in the target area. The controller 6 controls, in accordance with the information acquired by the action information acquisition unit 12, at least one of the flow velocity adjustment system 4 or the supply system 5. The action information acquisition unit 12 may be provided separately from the controller 6 or included in the controller 6, whichever is appropriate.

The action information acquisition unit 12 may acquire, from an action sensor 13, for example, action information about an organism (such as a person) present in the target space. In this embodiment, the action sensor 13 is not a constituent element of the airflow control system 1c. Alternatively, the action sensor 13 may also be a constituent element of the airflow control system 1c.

The action sensor 13 may be implemented as, for example, a location information acquisition system. The location information acquisition system is a system for acquiring, using a transmitter carried by a person with him or her and a receiver installed in a facility, location information of the transmitter. The location information acquisition system regards the location of the transmitter as the person's current location on the premise that the person is supposed to carry the transmitter with him or her. The transmitter has the function of transmitting an RF signal. The transmitter transmits the RF signal in a predetermined cycle. The RF signal may include identification information of the transmitter. The identification information may be used to identify a plurality of transmitters from each other. In the transmitter, the identification information is stored in a storage unit included in the transmitter. The storage unit may be, for example, a nonvolatile memory such as an electrically erasable programmable read-only memory (EEPROM).

The medium of the RF signal is a radio wave. In particular, the medium of the RF signal is a radio wave compliant with a short-range wireless communication standard. The short-range wireless communication standards may be Bluetooth(R)Low Energy, for example. In that case, the identification information is Bluetooth(R) Device Address. The short-range wireless communication standard does not have to be Bluetooth(R) Low Energy but may also be Wi-Fi(R), for example. The transmitter is large and heavy enough for a person to carry with him or her. The transmitter may be a beacon, for example. The beacon wirelessly transmits an RF signal (beacon signal) called an "advertisement packet," for example, at predetermined time intervals and with predetermined transmission power. Alternatively, the transmitter may also be implemented as a mobile telecommunications device such as a smartphone, a tablet computer, or a wearable terminal or a personal computer, for example.

The receiver is used to determine the location of the transmitter (i.e., the current location of the person who carries the transmitter with him or her). The receiver has the function of receiving the RF signal from the transmitter. In addition, the receiver is also connected to a server to establish communication with the server. The receiver is ready to communicate with the server via a communications network. On receiving the RF signal sent out from the transmitter, the receiver transmits, via the communications network, identification information and information about the received signal strength of the RF signal, which are included in the RF signal, to the server. The information about the received signal strength of the RF signal is a received signal strength indicator (RSSI). The receiver transmits RSSI information to the server if the RSSI is equal to or greater than a predetermined value, for example. If a target area in the facility is an indoor area, then the receiver may be mounted on the ceiling of the target area. Optionally, a plurality of receivers may be installed in the target area. Installing a plurality of receivers would improve the accuracy in determining the current location of the transmitter. The plurality of receivers have mutually different pieces of identification information. The identification information of each receiver may be stored, for example, in a nonvolatile memory included in the receiver.

The server may measure, based on the output of the receiver, the action (flow line) of the person who is present in the target area.

In the controller 6, the second control unit 62 control the supply system 5 in accordance with the action information acquired by the action information acquisition unit 12. In the airflow control system 1c, the first atomization unit 51 may supply a fragrance component (such as a citrus fragrance component) that would relax the person as a first functional component to the first airflow F1 and the second airflow F2. Meanwhile, the second atomization unit 52 may supply a deodorization component as a second functional component to the first airflow F1 and the second airflow F2.

The controller 6 includes a detection function unit for detecting, based on the action information acquired by the action information acquisition unit 12, for example, that the person who is now present in the target area has come back from an outdoor place (i.e., outside the facility). If the detection function unit has detected that the person who is currently present in the target area has come back from an outdoor place, then the second control unit 62 makes the second atomization unit 52 supply the second functional component and stops controlling the supply system 5 when a certain time has passed. Alternatively, the second control unit 62 may make the second atomization unit 52 stop supplying the second functional component and make the first atomization unit 51 start supplying the first functional component instead.

If the detection function unit has detected that the person who is now present in the target area has come back from an outdoor place, for example, the first control unit 61 controls the flow velocity adjustment system 4 to make the flow velocity of the first airflow F1 higher than the flow velocity of the second airflow F2. When a predetermined time has passed, the first control unit 61 controls the flow velocity adjustment system 4 to make the flow velocity of the second airflow F2 higher than the flow velocity of the first airflow F1.

If the detection function unit has detected that the person who is now present in the target area has come back from an outdoor place, for example, the third control unit 63 controls the blower 7 to make the blower 7 start turning. On the other hand, if the person has left the target area, the third control unit 63 controls the blower 7 to make the blower 7 stop turning.

The airflow control system 1c according to the fourth embodiment, as well as the airflow control system 1 according to the first embodiment, includes the flow velocity adjustment system 4, the supply system 5, and the controller 6, and therefore, enables changing the range in which the functional component is diffused.

The action sensor 13 does not have to be a sensor that uses the location information acquisition system using a beacon but may also be a sensor which uses a global positioning system (GPS), for example.

### (Fifth embodiment)

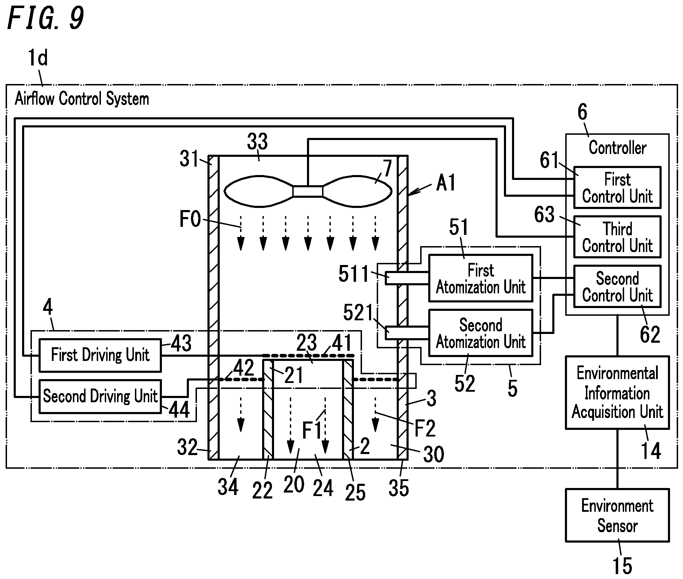

Next, an airflow control system 1d according to a fifth embodiment will be described with reference to FIG. 9. The airflow control system 1d according to the fifth embodiment includes an environmental information acquisition unit 14 instead of the object information acquisition unit 8 of the airflow control system 1 according to the first embodiment, which is a difference from the airflow control system 1 according to the first embodiment. In the following description, any constituent element of the airflow control system 1d according to this fifth embodiment, having the same function as a counterpart of the airflow control system 1 according to the first embodiment described above, will be designated by the same reference numeral as that counterpart's, and description thereof will be omitted herein.

In the airflow control system 1d, the controller 6 controls, in accordance with the information acquired by the environmental information acquisition unit 14, at least one of the flow velocity adjustment system 4 or the supply system 5. The environmental information acquisition unit 14 acquires environmental information about the target area. The controller 6 controls, in accordance with the information acquired by the environmental information acquisition unit 14, at least one of the flow velocity adjustment system 4 or the supply system 5. The environmental information acquisition unit 14 may be provided separately from the controller 6 or included in the controller 6, whichever is appropriate.

In the controller 6, the second control unit 62 control the supply system 5 in accordance with the environmental information acquired by the environmental information acquisition unit 14. In the airflow control system 1d, the first atomization unit 51 may supply a fragrance component (such as a citrus fragrance component) that would relax the person as a first functional component to the first airflow F1 and the second airflow F2. Meanwhile, the second atomization unit 52 may supply a deodorization component as a second functional component to the first airflow F1 and the second airflow F2.

The environmental information acquisition unit 14 acquires environmental information about the target space from an environment sensor 15, for example. In this embodiment, the environment sensor 15 is not a constituent element of the airflow control system 1d. Alternatively, the environment sensor 15 may also be a constituent element of the airflow control system 1d.

The environment sensor 15 may be an odor sensor, for example.

If the information acquired by the environmental information acquisition unit 14 from the environment sensor 15 includes information that an unpleasant odor has been detected in the target area for the person present there, for example, then the second control unit 62 makes the second atomization unit 52 supply the second functional component to the first airflow F1 and the second airflow F2. Thereafter, when a certain time has passed since the second atomization unit 52 started supplying the second functional component, the controller 6 stops controlling the supply system 5. Alternatively, the controller 6 makes the second atomization unit 52 stop supplying the second functional component and makes the first atomization unit 51 start supplying the first functional component to the first airflow F1 and the second airflow F2.

Also, if the information acquired by the environmental information acquisition unit 14 from the environment sensor 15 includes information that an unpleasant odor has been detected in the target area for the person present there, for example, then the first control unit 61 controls the flow velocity adjustment system 4 to make the flow velocity of the first airflow F1 higher than the flow velocity of the second airflow F2. When a predetermined time has passed, the first control unit 61 controls the flow velocity adjustment system 4 to make the flow velocity of the second airflow F2 higher than the flow velocity of the first airflow F1.

Furthermore, if the information acquired by the environmental information acquisition unit 14 from the environment sensor 15 includes information that an unpleasant odor has been detected in the target area for the person present there, for example, the third control unit 63 controls the blower 7 to make the blower 7 start turning. On the other hand, if the unpleasant odor is no longer detected, the third control unit 63 controls the blower 7 to make the blower 7 stop turning.

The airflow control system 1d according to the fifth embodiment, as well as the airflow control system 1 according to the first embodiment, includes the flow velocity adjustment system 4, the supply system 5, and the controller 6, and therefore, enables changing the range in which the functional component is diffused.

The environment sensor 15 does not have to be the odor sensor but may also be, for example, a temperature sensor, a humidity sensor, or a CO₂ sensor.

Note that the first to fifth embodiments described above are only exemplary ones of various embodiments of the present disclosure and should not be construed as limiting. Rather, the first to fifth exemplary embodiment may be readily modified in various manners depending on a design choice or any other factor without departing from the scope of the present disclosure and multiple different constituent elements of multiple different embodiments may be adopted in combination as appropriate.

### (Aspects)

The foregoing description provides specific implementations of the following aspects of the present disclosure.

An airflow control system (1; 1a; 1b; 1c; 1d) according to a first aspect includes a first outlet member (2), a second outlet member (3), a flow velocity adjustment system (4; 4a), a supply system (5), and a controller (6). The first outlet member (2) has a cylindrical shape. The first outlet member (2) has a first outlet vent (24). The second outlet member (3) has a second outlet vent (34). The second outlet member (3) surrounds the first outlet member (2). The flow velocity adjustment system (4; 4a) has the ability to adjust a flow velocity of a first airflow (F1) flowing through an internal space (20) of the first outlet member (2) toward the first outlet vent (24) and a flow velocity of a second airflow (F2) flowing through a space (30) between the second outlet member (3) and the first outlet member (2) toward the second outlet vent (34). The supply system (5) has the ability to supply a functional component to be diffused in the air to at least one of the first airflow (F1) or the second airflow (F2). The controller (6) controls at least one of the flow velocity adjustment system (4; 4a) or the supply system (5).

The airflow control system (1; 1a; 1b; 1c; 1d) according to the first aspect enables changing a range in which the functional component is diffused.

In an airflow control system (1; 1a; 1b; 1c; 1d) according to a second aspect, which may be implemented in conjunction with the first aspect, the flow velocity adjustment system (4) includes at least one of a first resistance unit (41) that adjusts the flow velocity of the first airflow (F1) by adjusting air resistance or a second resistance unit (42) that adjusts the flow velocity of the second airflow (F2) by adjusting the air resistance.

The airflow control system (1; 1a; 1b; 1c; 1d) according to the second aspect enables changing the relative order between the flow velocity of the first airflow (F1) and the flow velocity of the second airflow (F2) by adjusting at least one of the air resistance of the first resistance unit (41) to the first airflow (F1) or the air resistance of the second resistance unit (42) to the second airflow (F2). Thus, the airflow control system (1; 1a; 1b; 1c; 1d) according to the second aspect makes the flow velocity of the second airflow (F2) higher than the flow velocity of the first airflow (F1), thus reducing the degree of directivity (i.e., decreasing the degree of straightness) of the airflow blowing out of the airflow control system (1; 1a; 1b; 1c; 1d) and thereby broadening the range in which the functional component is diffused in the target space, compared to a situation where the flow velocity of the second airflow (F2) is made lower than the flow velocity of the first airflow (F 1).

In an airflow control system (1a) according to a third aspect, which may be implemented in conjunction with the first aspect, the flow velocity adjustment system (4a) includes a first fan (45) that adjusts the flow velocity of the first airflow (F1) and a second fan (46) that adjusts the flow velocity of the second airflow (F2).

The airflow control system (1a) according to the third aspect may adjust the flow velocity of the first airflow (F1) using the first fan (45) and adjust the flow velocity of the second airflow (F2) using the second fan (46), thus enabling changing the relative order between the flow velocity of the first airflow (F1) and the flow velocity of the second airflow (F2). Therefore, the airflow control system (1a) according to the third aspect makes the flow velocity of the second airflow (F2) higher than the flow velocity of the first airflow (F1), thus reducing the degree of directivity (i.e., decreasing the degree of straightness) of the airflow blowing out of the airflow control system (1a) and thereby broadening the range in which the functional component is diffused in the target space, compared to a situation where the flow velocity of the second airflow (F2) is made lower than the flow velocity of the first airflow (F 1).

In an airflow control system (1; 1a; 1b; 1c; 1d) according to a fourth aspect, which may be implemented in conjunction with any one of the first to third aspects, the supply system (5) may supply multiple types of the functional components. The controller (6) adjusts, by controlling the supply system (5), any of the multiple types of the functional components to be supplied from the supply system (5) to the first airflow (F1) and the second airflow (F2).

The airflow control system (1; 1a; 1b; 1c; 1d) according to the fourth aspect enables changing the functional component to be supplied from the supply system (5) to the first airflow (F1) and the second airflow (F2).

An airflow control system (1; 1a) according to a fifth aspect, which may be implemented in conjunction with any one of the first to fourth aspects, further includes an object information acquisition unit (8). The object information acquisition unit (8) acquires information about a target object (100) present in a target space. The controller (6) controls, in accordance with the information acquired by the object information acquisition unit (8), at least one of the flow velocity adjustment system (4; 4a) or the supply system (5).

The airflow control system (1; 1a) according to the fifth aspect may control at least one of the flow velocity adjustment system (4) or the supply system (5) according to the environment of a target area to be affected by the target object (100) present in the target area. Thus, the airflow control system (1; 1a) according to the fifth aspect enables changing, according to the environment of the target area, the range in which the functional component is diffused.

In an airflow control system (1; 1a) according to a sixth aspect, which may be implemented in conjunction with the fifth aspect, the target object (100) is one or more organisms. The information about the target object (100) is a numerical number of the one or more organisms.

The airflow control system (1; 1a) according to the sixth aspect may control at least one of the flow velocity adjustment system (4; 4a) or the supply system (5) according to the environment of a target area affected by the organism present in the target area.

In an airflow control system (1; 1a) according to a seventh aspect, which may be implemented in conjunction with the fifth aspect, the target object (100) is one or more tables. The information about the target object (100) includes at least one of a numerical number of the one or more tables or a size of the one or more tables.

The airflow control system (1; 1a) according to the seventh aspect may control at least one of the flow velocity adjustment system (4; 4a) or the supply system (5) according to the number and/or a size of the one or more tables present in the target area.

An airflow control system (1b) according to an eighth aspect, which may be implemented in conjunction with any one of the first to fifth aspects, further includes a biometric information acquisition unit (10). The biometric information acquisition unit (10) acquires biometric information about an organism present in a target area. The controller (6) controls at least one of the flow velocity adjustment system (4) or the supply system (5) in accordance with the biometric information acquired by the biometric information acquisition unit (10).

The airflow control system (1b) according to the eighth aspect may control at least one of the flow velocity adjustment system (4) or the supply system (5) in accordance with the biometric information of the one or more organisms present in the target area.

An airflow control system (1c) according to a ninth aspect, which may be implemented in conjunction with any one of the first to fifth aspects, further includes an action information acquisition unit (12). The action information acquisition unit (12) acquires action information about an organism present in a target area. The controller (6) controls at least one of the flow velocity adjustment system (4) or the supply system (5) in accordance with the action information acquired by the action information acquisition unit (12).

The airflow control system (1c) according to the ninth aspect may control at least one of the flow velocity adjustment system (4) or the supply system (5) in accordance with the action information of the one or more organisms present in the target area.

An airflow control system (1d) according to a tenth aspect, which may be implemented in conjunction with any one of the first to fifth aspects, further includes an environmental information acquisition unit (14). The environmental information acquisition unit (14) acquires environmental information about a target area. The controller (6) controls at least one of the flow velocity adjustment system (4) or the supply system (5) in accordance with the environmental information acquired by the environment information acquisition unit (14).

The airflow control system (1d) according to the tenth aspect may control at least one of the flow velocity adjustment system (4) or the supply system (5) in accordance with the environmental information of the target area.

In an airflow control system (1; 1a; 1b; 1c; 1d) according to an eleventh aspect, which may be implemented in conjunction with any one of the first to tenth aspects, the first outlet member (2) has a shape of a circular cylinder. The second outlet member (3) has a shape of a circular cylinder, of which an inside diameter is larger than an outside diameter of the first outlet member (2). The second outlet member (3) is arranged to have a center axis of the second outlet member (3) aligned with a center axis of the first outlet member (2).

The airflow control system (1; 1a; 1b; 1c; 1d) according to the eleventh aspect enables increasing the controllability of a range in which the functional component is diffused.

In an airflow control system (1; 1a; 1b; 1c; 1d) according to a twelfth aspect, which may be implemented in conjunction with the eleventh aspect, when measured in a direction parallel to the center axis of the first outlet member (2), a length of the first outlet member (2) is less than a length of the second outlet member (3). An opening verge (25) of the first outlet vent (24) of the first outlet member (2) and an opening verge (35) of the second outlet vent (34) of the second outlet member (3) are located at the same position in the direction parallel to the center axis of the first outlet member (2).

The airflow control system (1; 1a; 1b; 1c; 1d) according to the twelfth aspect enables increasing the controllability of the range in which the functional component is diffused.

An airflow control system (1; 1a; 1b; 1c; 1d) according to a thirteenth aspect, which may be implemented in conjunction with any one of the first to twelfth aspects, further includes a blower (7). The blower (7) lets a gas flow through the first outlet member (2) and the second outlet member (3).

The airflow control system (1; 1a; 1b; 1c; 1d) according to the thirteenth aspect enables controlling the flow velocity of an airflow (F0), from which the first airflow (F1) and the second airflow (F2) are produced, using the blower (7), thus increasing the degree of freedom in the control of the range in which the functional component is diffused.

An airflow control method according to a fourteenth aspect includes at least one of a first control step or a second control step. The first control step includes controlling a flow velocity of a first airflow (F1) flowing through an internal space (20) of a first outlet member (2) toward a first outlet vent (24) and a flow velocity of a second airflow (F2) flowing through a space (30) between a second outlet member (3) and the first outlet member (2) toward a second outlet vent (34). The first outlet member (2) has the first outlet vent (24) and a cylindrical shape. The second outlet member (3) has the second outlet vent (34) and surrounds the first outlet member (2). The second control step includes controlling a state where a functional component to be diffused in the air is supplied to at least one of the first airflow (F 1) or the second airflow (F2).

The airflow control method according to the fourteenth aspect enables changing a range in which the functional component is diffused.

A program according to a fifteenth aspect is designed to cause a computer system to perform the airflow control method according to the fourteenth aspect.

The program according to the fifteenth aspect enables changing a range in which the functional component is diffused.

### Reference Signs List

- 1, 1a, 1b, 1c, 1d: Airflow Control System
- 2: First Outlet Member
- 20: Internal Space
- 21: First End
- 22: Second End
- 24: First Outlet Vent
- 25: Opening Verge
- 3: Second Outlet Member
- 31: First End
- 32: Second End
- 34: Second Outlet Vent
- 35: Opening Verge
- 4, 4a: Flow Velocity Adjustment System
- 41: First Resistance Unit
- 411: First Punched Metal Plate
- 4111: Larger Hole
- 4112: Smaller Hole
- 412: Second Punched Metal Plate
- 4121: Larger Hole
- 4122: Smaller Hole
- 42: Second Resistance Unit
- 421: First Punched Metal Plate
- 4211: Larger Hole
- 4212: Smaller Hole
- 422: Second Punched Metal Plate
- 4221: Larger Hole
- 4222: Smaller Hole
- 43: First Driving Unit
- 44: Second Driving Unit
- 45: First Fan
- 46: Second Fan
- 5: Supply System
- 51: First Atomization Unit
- 511: First Nozzle
- 52: Second Atomization Unit
- 521: Second Nozzle
- 6: Controller
- 61: First Control Unit
- 62: Second Control Unit
- 63: Third Control Unit
- 7: Blower
- 8: Object Information Acquisition Unit
- 9: Image Sensor
- 10: Biometric Information Acquisition Unit
- 11: Biometric Information Sensor
- 12: Action Information Acquisition Unit
- 13: Action Sensor
- 14: Environmental Information Acquisition Unit
- 15: Environment Sensor
- F1: First Airflow
- F2: Second Airflow

## Claims

1. An airflow control system comprising:
a first outlet member having a first outlet vent and a cylindrical shape;
a second outlet member having a second outlet vent and surrounding the first outlet member;
a flow velocity adjustment system having ability to adjust a flow velocity of a first airflow flowing through an internal space of the first outlet member toward the first outlet vent and a flow velocity of a second airflow flowing through a space between the second outlet member and the first outlet member toward the second outlet vent;
a supply system having ability to supply a functional component to be diffused in the air to at least one of the first airflow or the second airflow; and
a controller configured to control at least one of the flow velocity adjustment system or the supply system.

2. The airflow control system of claim 1, wherein
the flow velocity adjustment system includes at least one of:
a first resistance unit configured to adjust the flow velocity of the first airflow by adjusting air resistance; or
a second resistance unit configured to adjust the flow velocity of the second airflow by adjusting the air resistance.

3. The airflow control system of claim 1, wherein
the flow velocity adjustment system includes:
a first fan configured to adjust the flow velocity of the first airflow; and
a second fan configured to adjust the flow velocity of the second airflow.

4. The airflow control system of any one of claims 1 to 3, wherein
the supply system has ability to supply multiple types of the functional components, and
the controller is configured to adjust, by controlling the supply system, any of the multiple types of the functional components to be supplied from the supply system to the first airflow and the second airflow.

5. The airflow control system of any one of claims 1 to 4, further comprising an object information acquisition unit configured to acquire information about a target object present in a target space, wherein
the controller is configured to control, in accordance with the information acquired by the object information acquisition unit, at least one of the flow velocity adjustment system or the supply system.

6. The airflow control system of claim 5, wherein
the target object is one or more organisms, and
the information about the target object is a numerical number of the one or more organisms.

7. The airflow control system of claim 5, wherein
the target object is one or more tables, and
the information about the target object includes at least one of a numerical number of the one or more tables or a size of the one or more tables.

8. The airflow control system of any one of claims 1 to 5, further comprising a biometric information acquisition unit configured to acquire biometric information about an organism present in a target area, wherein
the controller is configured to control at least one of the flow velocity adjustment system or the supply system in accordance with the biometric information acquired by the biometric information acquisition unit.

9. The airflow control system of any one of claims 1 to 5, further comprising an action information acquisition unit configured to acquire action information about an organism present in a target area, wherein
the controller is configured to control at least one of the flow velocity adjustment system or the supply system in accordance with the action information acquired by the action information acquisition unit.

10. The airflow control system of any one of claims 1 to 5, further comprising an environmental information acquisition unit configured to acquire environmental information about a target area, wherein
the controller is configured to control at least one of the flow velocity adjustment system or the supply system in accordance with the environmental information acquired by the environment information acquisition unit.

11. The airflow control system of any one of claims 1 to 10, wherein
the first outlet member has a shape of a circular cylinder,
the second outlet member has a shape of a circular cylinder, of which an inside diameter is larger than an outside diameter of the first outlet member, and
the second outlet member is arranged to have a center axis of the second outlet member aligned with a center axis of the first outlet member.

12. The airflow control system of claim 11, wherein
when measured in a direction parallel to the center axis of the first outlet member, a length of the first outlet member is less than a length of the second outlet member, and
an opening verge of the first outlet vent of the first outlet member and an opening verge of the second outlet vent of the second outlet member are located at the same position in the direction parallel to the center axis of the first outlet member.

13. The airflow control system of any one of claims 1 to 12, further comprising a blower configured to let a gas flow through the first outlet member and the second outlet member.

14. An airflow control method comprising at least one of:
a first control step including controlling a flow velocity of a first airflow flowing through an internal space of a first outlet member toward a first outlet vent and a flow velocity of a second airflow flowing through a space between a second outlet member and the first outlet member toward a second outlet vent, the first outlet member having the first outlet vent and a cylindrical shape, the second outlet member having the second outlet vent and surrounding the first outlet member; or
a second control step including controlling a state where a functional component to be diffused in the air is supplied to at least one of the first airflow or the second airflow.

15. A program designed to cause a computer system to perform the airflow control method of claim 14.
